# EUROPEAN PATENT APPLICATION

(11) **EP 4 292 427 A1**
(43) Date of publication of application: **20.12.2023**
(21) Application number: 22178745.0
(22) Date of filing: 13.06.2022
(51) Int. Cl.: A01K 15/02

(54) **A METHOD OF DETERMINING A COGNITIVE AND PHYSICAL CAPACITY OF A PET, AND SYSTEM THEREFOR**

(71) Applicant: Joipaw Ltd, London WC2H 9JQ (GB)
(72) Inventor: Avdar, Dersim Siyar, Hong Kong (HK); Jenny, Marco Felix, 8700 Küsnacht (CH)
(74) Representative: Doherty, William

(57) **Abstract**

A method (M100) of determining a cognitive and physical capacity of a pet to provide cognitive and physical information to a user (26) is provided. Cognitive and physical indicator parameters are retrieved from a touch screen display device (14) and a wearable monitoring device (18) on the pet, which can then be used to determine (S106) cognitive and physical indicator data relating to the pet for subsequent display of cognitive and physical information at a user device (22).

## Description

The present invention relates to a method of determining a cognitive and physical capacity of a pet to provide cognitive and physical information to a user, typically via an app. The invention further relates to a system capable of implementing said method.

Fitness tracking has become widely used for monitoring the health of people, but there are limited options available which are suitable for pets. Products available relate to tracking devices for pets, which provide an indication as to the physical status of the pet. It is well-documented that pets can suffer not only from physical ailments, but also from cognitive decline, which can be distressing for the pet owners. There are significant difficulties in determining wellbeing of a pet, particularly cognitive wellbeing, given the communication difficulties involved. Pets have only a limited capacity for indicating problems to their owners.

The present invention seeks to provide a holistic approach to health tracking for a pet, encompassing both cognitive and physical aspects of health.

According to a first aspect of the invention, there is provided a method of determining a cognitive and physical capacity of a pet to provide cognitive and physical information to a user, the method comprising the steps of: a) providing a cognitive and/or physical capacity assessment system for the pet, the system comprising: a touch screen display device having a touch screen; a wearable monitoring device having a wearable item fixable to the pet and at least one sensor mounted to the wearable item; a processing module communicable with the touch screen display device and the wearable monitoring device; and a user device having a display screen, the user device being communicable with the processing module; wherein the wearable monitoring device is in-use fixed to the pet, and wherein the touch screen display device is in-use positioned to receive a touch response from the pet; b) displaying one or more cognitive indicator stimuli on the touch screen of the touch screen display device; c) determining at least one cognitive indicator parameter based on a stimulus response input made by the pet at the touch screen in response to the one or more cognitive indicator stimuli; d) providing the at least one cognitive indicator parameter to the processing module; e) determining at least one further cognitive indicator parameter and at least one physical indicator parameter based on measurements collected by the at least one sensor mounted to the wearable item of the wearable monitoring device; f) providing the at least one further cognitive indicator parameter and at least one physical indicator parameter to the processing module; g) determining, at the processing module, cognitive and physical indicator data based on the at least one cognitive indicator parameter, the at least one further cognitive indicator parameter, and the at least one physical indicator parameter; and h) displaying cognitive and physical information to a user of the user device based on the cognitive and physical indicator data.

The present invention seeks to combine data streams available within tracking devices for pets and those retrievable within pet gaming software which collectively provide indicative data regarding both the physical and cognitive state of the pet. Since different types of data are provided from each type of device, it becomes possible to characterise the type of ailments experienced by the pet in a manner not previously possible. For instance, behavioural data accumulated from the wearable device may be readily combinable with reaction time data from the touch screen display device to provide an indication as to the likelihood of dementia for the pet. Many potential conditions or ailments could then be diagnosed using the method, or at least predicted for consideration by a veterinary professional.

During step g], the determining of the cognitive and physical data indicator data may be performed based on any or all of: pre-processed cognitive indicator parameter data based on the at least one cognitive indicator parameter; pre-processed further cognitive indicator parameter data based on the at least one further cognitive indicator parameter; and pre-processed physical indicator parameter data based on the at least one physical indicator parameter.

In order to optimise performance of the system, it is preferred that vast amounts of raw data not be transmitted between devices, particularly from the wearable monitoring device where bulk may cause discomfort to the pet. Pre-processing is therefore desirable to reduce data transmission requirements.

Optionally, any or all of the pre-processed cognitive indicator parameter data, the pre-processed further cognitive indicator parameter data, and the pre-processed physical indicator parameter data may comprise diagnostic indicator data relating to one or more cognitive and/or physical capacities of the pet. The diagnostic indicator data may comprise data indicative of one or more cognitive and/or physical ailments of the pet.

The capacity to use multiple different data streams to pre-emptively identify particular ailments for a pet is a wholly new development, leading to significant advances in diagnostic capabilities for pet owners. This is not only capable of determining physical conditions, which might be readily recognised by a veterinary practitioner, but also cognitive ailments which would otherwise require long-term monitoring of the pet in an unfamiliar environment.

Any or all of the pre-processed cognitive indicator parameter data, the pre-processed further cognitive indicator parameter data, and the pre-processed physical indicator parameter data may be generated by a machine-learning algorithm.

Machine learning techniques can advantageously be used to improve the determination of probabilistic indicators for particularly cognitive health, since the incoming data sets may cover a wide range of different potential indicator parameters.

During step h], the cognitive and physical information may comprise one or more probabilistic scores indicative of one or more cognitive and/or physical ailments of the pet.

Probabilities indicative of likelihoods of specific ailments may provide users with clear indications of what their pets issues may be in reality.

Preferably, during step c], cognitive indicator parameters determined may include any or all of: play score per game session; number of errors per game session; reaction time or speed; tapping precision; number of game sessions initiated by the pet; focus time; streak length for correct and/or incorrect touches; touch location preferences; and indicators of mental distress, such as destructive behaviour, posture, whining, barking, vomiting, or panting.

There are many factors which could be recorded as being indicative of cognitive function, many of which can be tested by gaming and other peripherals or accessories associated with the touch screen display device.

Optionally, during step e], the at least one further cognitive indicator parameter and at least one physical indicator parameter may include any or all of: indicators of mental distress, such as destructive behaviour, posture, whining, barking, vomiting, pacing, or panting; number of steps taken; walking patterns or imbalances; sleep patterns; licking; eating and drinking habits; and shaking.

There are many factors which could be recorded as being indicative of both cognitive and physical function, and the cross-linking between associated factors is what can allow for the diagnostic capabilities of the present invention to be realised.

According to a second aspect of the invention, there is provided a cognitive and physical capacity assessment system for a pet, the system comprising: a touch screen display device having a touch screen; a wearable monitoring device having a wearable item fixable to the pet and at least one sensor mounted to the wearable item; a processing module communicable with the touch screen display device and the wearable monitoring device; and a user device having a display screen, the user device being communicable with the processing module; wherein the wearable monitoring device is configured to be in-use fixed to the pet, and wherein the touch screen display device is in-use positioned to receive a touch response from the pet; wherein the touch screen display device is configured to display one or more cognitive indicator stimuli on the touch screen, at least one cognitive indicator parameter based on a stimulus response input made by the pet at the touch screen in response to the one or more cognitive indicator stimuli being determinable; wherein the at least one sensor mounted to the wearable item of the wearable monitoring device is configured to measure at least one further cognitive parameter and at least one physical indicator parameter; wherein the processing module is configured to determine cognitive and physical indicator data based on the at least one cognitive indicator parameter, the at least one further cognitive indicator parameter and the at least one physical indicator parameter; and wherein the user device is configured to display cognitive and physical information to a user thereof based on the cognitive and physical indicator data.

A system which is configured to have all of the functional parts to assess the health, both physically and mentally, of a pet, is able to provide a holistic overview of the state of the pet, more rapidly identifying issues of concern which would otherwise require veterinary intervention.

In an optional embodiment, the processing module may be provided onboard any of the touch screen display device, the wearable monitoring device, and the user device.

Since most of the devices used in the system have onboard processors, it may be feasible to provide processing of the cognitive and physical parameters at a most appropriate point, reducing the hardware requirements for operation of the system.

In an alternative preferable embodiment, the processing module may be provided at a remote processing server.

Processing power can be maximised where processing is performed remotely, allowing for greater miniaturisation of the other parts of the system.

Preferably, the wearable monitoring device may be directly communicable with the user device.

Direct communication between the wearable monitoring device and user device allows for data to be relayed via the user device, negating the need for continuous communication from the wearable monitoring device which would otherwise drain the onboard power supply of the wearable monitoring device too quickly.

The at least one sensor may comprise any or all of: an audio capture device; a heartrate monitor; an accelerometer; a position tracking device; a gyroscope; and a temperature sensor.

The more different types of sensor which are applied to the wearable monitoring device, the better the capture of different cognitive and physical indicator parameters which may synergistically indicate specific ailments.

Optionally, the touch screen display device may further comprise an image capture device configured to capture images of the pet during use.

An image capture device provides a means of capturing information regarding the pet itself, which in conjunction with machine learning in particular, can lead to improved diagnostic capabilities.

Preferably, the touch screen display device may further comprise an audio capture device configured to capture audio of the pet during use.

Audio capture may yield important data relating to certain instances of mental distress, such as whining, panting, or barking, which may not be inferable from image capture devices.

The invention will now be more particularly described, by way of example only, with reference to the accompanying drawings, in which:
Figure 1 shows a pictorial representation of a first embodiment of a system for determining a cognitive and physical capacity of a pet in accordance with the second aspect of the invention;
Figure 2 shows a pictorial representation of the system of Figure 1, with a pet interacting with a touchscreen device thereof;
Figure 3 shows a pictorial representation of the system of Figure 1, with a pet barking and not interacting with a touchscreen device thereof;
Figure 4 shows a pictorial representation of the system of Figure 1, with a pet demonstrating signs of cognitive and/or physical decline;
Figure 5 shows a pictorial representation of the system of Figure 1, illustrating data communication paths between the various components of the system;
Figure 6 shows a diagrammatic representation of an embodiment of a method of determining a cognitive and physical capacity of a pet in accordance with the first aspect of the invention;
Figure 7A shows a pictorial representation of a user interface of a user device as part of a second embodiment of a system for determining a cognitive and physical capacity of a pet in accordance with the second aspect of the invention; and
Figure 7B shows a pictorial representation of an alternative user interface of the user device of Figure 7B.

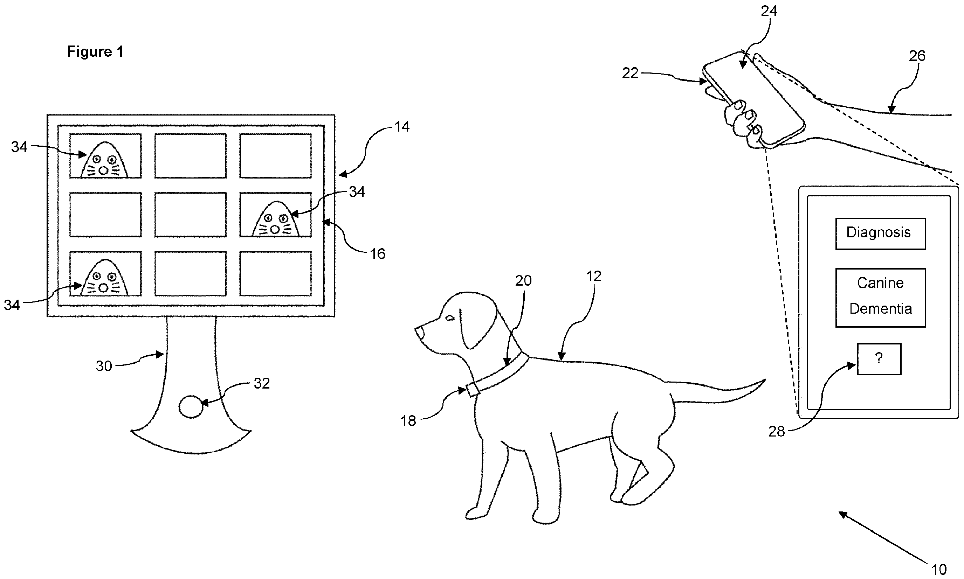

Referring to Figure 1 there is indicated a cognitive and physical capacity assessment system for a pet, referenced globally at 10, and which is used for determining whether a pet 12, illustrated as a dog, is cognitively or physically impaired.

The system 10 comprises a touch screen display device 14 having a touch screen 16, and a wearable monitoring device 18 having a wearable item 20 fixable to the pet 12 and at least one sensor mounted to the wearable item 20. The wearable item 20 is shown as a collar, but can be mounted to the pet 12 in any appropriate manner, such as via a coat, boots, harness, or a clip.

The system 10 further comprises a user device 22, typically a user smartphone, having a display screen 24 configured to display cognitive and physical information to the user 26. This is illustrated here as a probabilistic indication 28 of a degenerative cognitive condition of the pet 12 on the display screen 24.

Determination of the cognitive and physical information is made at a processing module of the system 10, which may be onboard the touch screen display device 14, onboard the wearable monitoring device 18, onboard the user device 22, or more preferably provided as part of a separate remote server.

The touch screen display device 14 may have a stand 30 configured to dispense treats from a pet treat dispenser 32 in response to input via the touch screen 16. Treats may be dispensed in the event of successful interactions with the games. The touch screen display device 14 may also have an automatic sleep mode, activatable after a period of non-interaction by the pet 12 or user 26.

In a simplified version of the process implemented by the system 10, the touch screen display device 14 is provided in an accessible location for the pet 12, that is, within touching distance. The pet 12 is provided with the wearable monitoring device 14, and information sourced from both the touch screen display device 14 and the wearable monitoring device 18 is communicable to the user device 22.

The touch screen display device 14 is configured to produce one or more cognitive stimuli 34, designed to determine at least one cognitive indicator parameter relating to the pet 12.

In the depicted embodiment, this is provided as a video game, here in the form of a whack-a-mole type game, designed to test the reflexes and/or attentiveness of the pet 12. Interaction by the pet 12 with the touch screen 16 will provide data in respect of the cognitive indicator parameter.

Examples of cognitive indicator parameters recordable by the touch screen display device 14 include, but are not limited to: play score per game session; number of errors per game session; reaction time or speed; tapping precision; number of game sessions initiated by the pet 12; focus time; streak length for correct and/or incorrect touches; touch location preferences, that is, whether the pet has predilections towards touching the touch screen display device 14 in specific locations on the touch screen 16; and indicators of mental distress, such as destructive behaviour, posture, whining, barking, vomiting, or panting, for a dog. It will be appreciated that this is a non-exhaustive list of potential cognitive indicator parameters, and new data may be extractable depending on the sensor configuration available to the user.

Some of the cognitive indicator parameters may be recordable not necessarily by the response to the cognitive indicator stimuli, but may be recordable using one or more additional sensors or input means of the touch screen display device 14, such as cameras or microphones. Some of the cognitive indicator parameters may also be indicative physical indicator parameters as well, allowing some physical indicator data to be retrieved by the touch screen display device 14.

The wearable monitoring device 18 is configured to be attached to the pet 12, and is designed to retrieve both cognitive indicator parameters and physical indicator parameters. It will of course be appreciated that the wearable monitoring device 18 could be configured to measure only one of cognitive or physical indicator parameters.

Examples of cognitive and/or indicator parameters recordable by the wearable monitoring device 18 include, but are not limited to: indicators of mental distress, such as destructive behaviour, posture whining, barking, vomiting, pacing or panting, for a dog; number of steps taken; walking patterns or imbalances; sleep patterns; licking; eating and drinking habits; and shaking.

The cognitive and physical indicator parameters are used by the processing module to determine cognitive and physical indicator parameter data, from which user-relevant information can be provided via the user device 22. In the indicative embodiment shown, the probabilistic indication 28 of a degenerative cognitive condition, such as dementia, of the pet 12 is displayed on the display screen 24 of the user device 22.

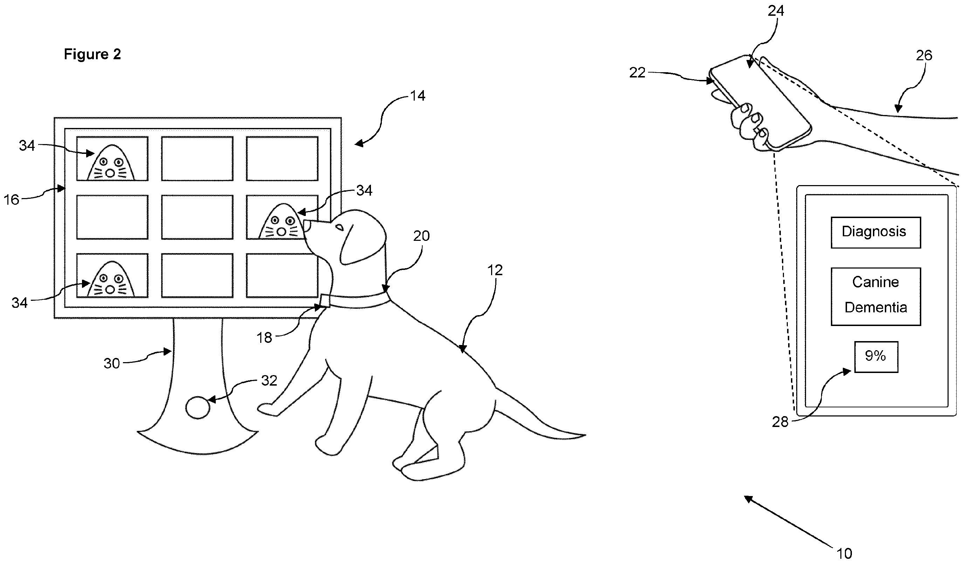

Figure 2 shows a healthy pet 12. It is interacting well with the cognitive stimuli 34 on the touch screen 16, and has normal readings on the wearable monitoring device 18 for both cognitive and physical measurements. The probability of canine dementia is low.

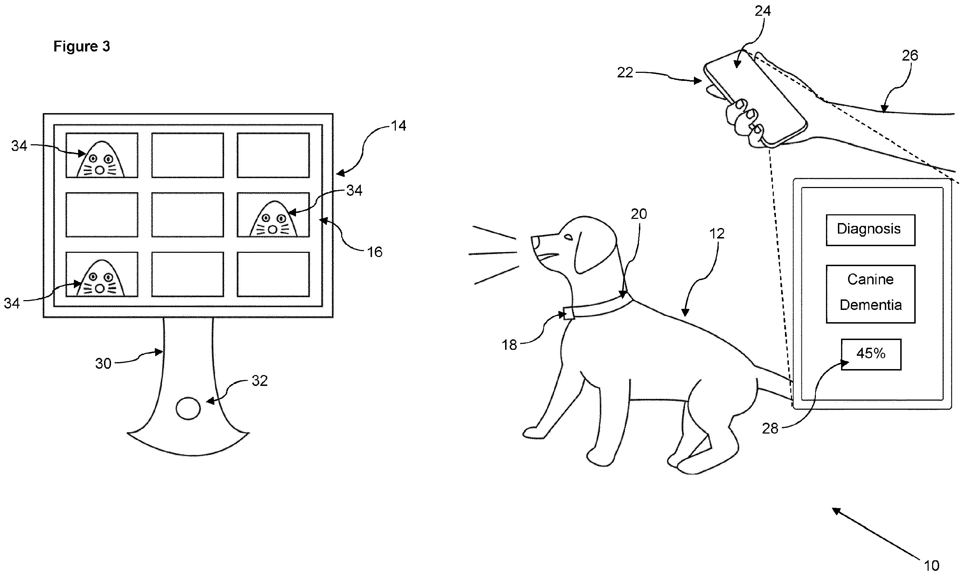

Figure 3 shows a pet 12 exhibiting signs of mental distress, barking at the touch screen display device 14. The pet 12 is not interacting with the system 10 in the expected manner, but equally, this is not necessarily an indicator of canine dementia, and the probability score is medium. One might anticipate that an alternative diagnosis be determined in this event, even though this is not shown in Figure 3 for simplicity.

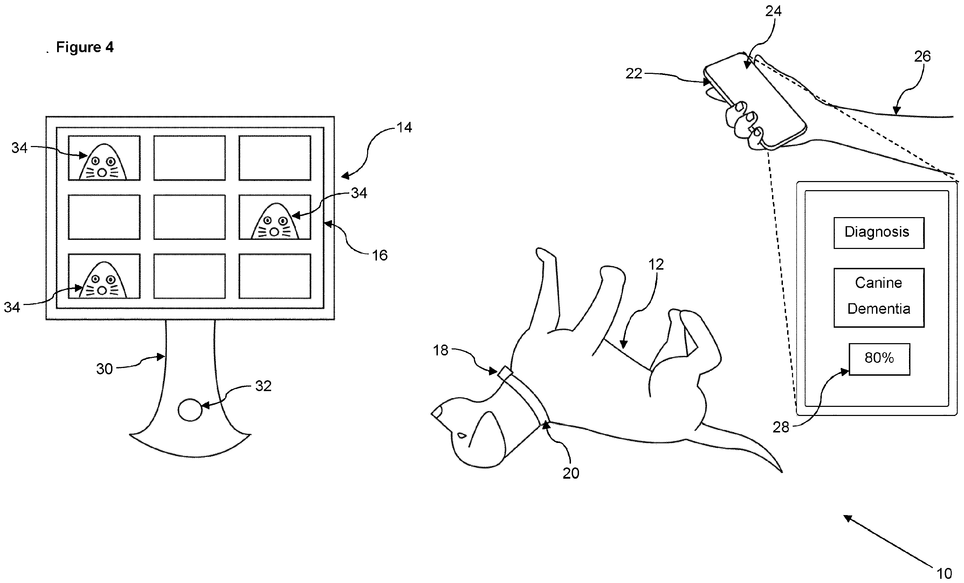

Figure 4 shows a pet 16 exhibiting severe signs of cognitive and physical decline. An assessment of a probable diagnosis of canine dementia is presented to the user 26.

As noted, this is an extreme simplification of the system 10 for illustrative purposes. The interaction between the component parts of the system 10 will now be explained in more detail in order to provide a more complete picture of the capabilities thereof.

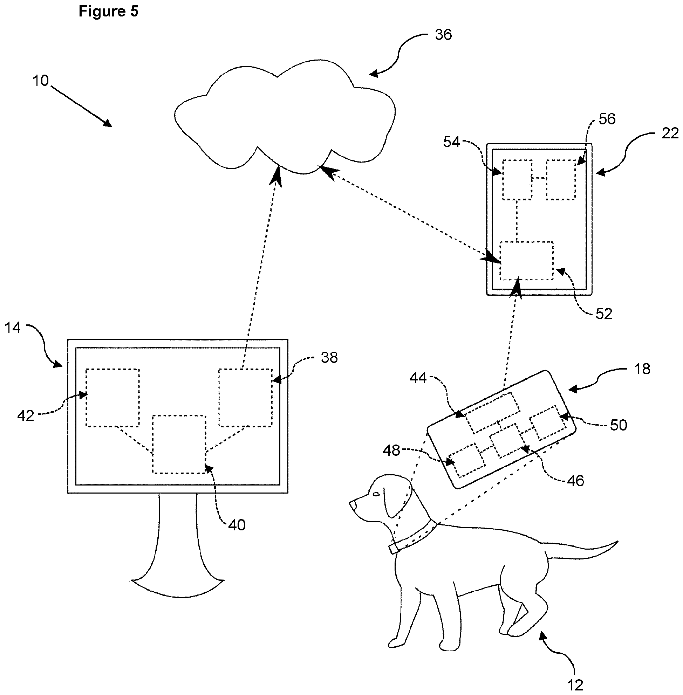

Figure 5 shows some of the architecture of the system 10, and its communication capabilities, inclusive of an indicative representation of a cloud server 36 which at least in part acts as the processing module here. Internal electronic componentry is shown in dashed lines, whilst dashed arrows show communication pathways.

The touch screen display device 14 includes a communication module 38 which is communicatively coupled to a processor 40 and to a memory storage module 42. Cognitive indicator parameters retrieved by the touch screen display device 14 can be transmitted to the cloud server 36 in order to conduct the processing into cognitive indicator parameter data. This may be streamed in raw form, given that data will likely only be collected during game sessions controlled by the processor 40 and memory storage module 42.

Typically, the communication module 38 will only need to transmit data to the cloud server 36, but it could of course be configured to receive data, for instance, to implement firmware or software updates at the touch screen display device 14.

The wearable monitoring device 18 includes a communication module 44 which is communicatively coupled to a processor 46 and to a memory storage module 48. The processor 46 is further communicable with one or more onboard sensors 50 of the wearable monitoring device 18.

Said sensors 50 may comprises any or all of: an audio capture device; a heartrate monitor; an accelerometer; a position tracking device; a gyroscope; and a temperature sensor.

It is preferred that the processor 46 be configured to perform pre-processing of the raw data retrieved by the sensors 50 in order to minimise memory usage and/or minimise data transmission requirements. Pre-processing allows for smaller data packets to be transferred. Whilst the wearable monitoring device 18 may communicate directly with the cloud server 36 in its capacity as the processing module, data transmission may be simpler if communication occurs directly to the user device 22 which can then transmit data onwards to the cloud server 36. This allows for data packets to be transferred from the wearable monitoring device 18 over short-range data transmission means such as near-field communication means, which may further reduce the volume of the wearable monitoring device 18 for the pet 12.

For this, there may be as part of the communications module 44 of the wearable monitoring device 18 a rangefinder for determining whether the user device 22 is within communications range, which may assist with power consumption efficiency.

It will be clear that pre-processing of any of the data sources yielding cognitive or physical indicator parameters could be used, from any of the touchscreen display device 14, wearable monitoring device 18, or user device 22.

It will be appreciated that, whilst not necessary in the present embodiment of the invention, the wearable monitoring device 18 may be communicable with the touch screen display device 14.

The user device 22, typically being a smartphone or tablet computer capable of running an app, includes a communications module 52 which is communicatively coupled to a processor 54 and to a memory storage module 56. The communications module 52 is, as discussed above, communicable with the wearable monitoring device 18, but also communicable with the cloud server 36. Cognitive and physical indicator parameters measured by the wearable monitoring device 18 can thus be transmitted onward to the cloud server 36 in its guise as processing module. Cognitive and physical indicator parameter data can thus be transmitted back to the user device 22 from the cloud server 36 for presentation to the user 26.

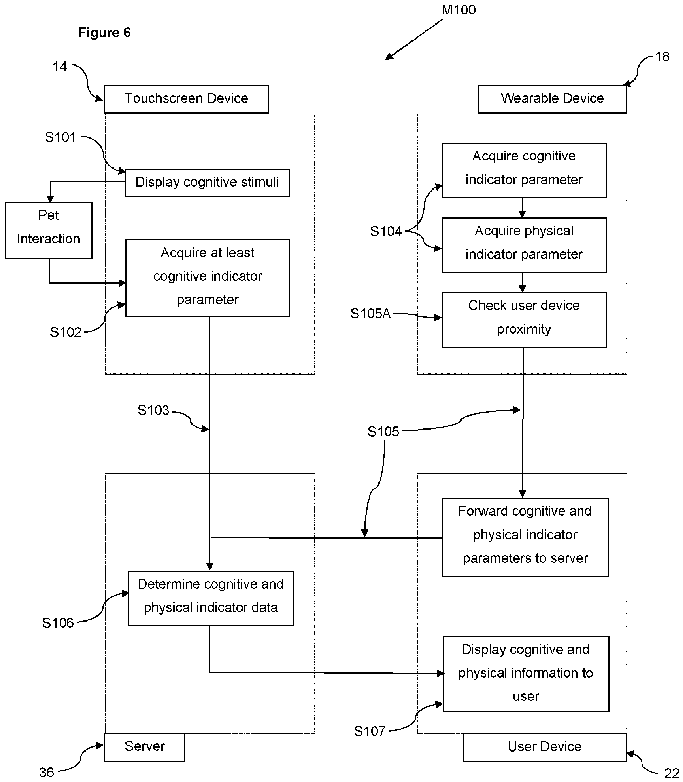

Figure 6 clarifies the method of determining a cognitive and physical capacity of a pet to provide cognitive and physical information to a user 26, indicated globally at M100, within the context of the various components previously referenced.

One or more cognitive indicator stimuli are displayed, at step S101, on the touch screen 16 of the touch screen display device 14, for interaction with by a pet 12.

At least one cognitive indicator parameter can then be determined, at step S102, based on a stimulus response input made by the pet 12 at the touch screen 16 in response to the one or more cognitive indicator stimuli. It will be appreciated that the stimulus response input may include one or more physical indicator parameters as well, or indeed as an alternative. For example, reaction speed is a measure of both cognitive capacity and physical capacity for the pet.

The at least one cognitive indicator parameter is then provided, at step S103, to the processing module, here being the cloud server 36. If gathered, any physical indicator parameters can also be provided to the processing module during step S103.

At least one further cognitive indicator parameter and at least one physical indicator parameter is determined, at steps S104, based on measurements collected by the at least one sensor 50 mounted to the wearable item 20 of the wearable monitoring device 18.

The at least one further cognitive indicator parameter and at least one physical indicator parameter are then provided, at step S105, to the processing module, here by transmission to the user device 22 and on to the cloud server 36. The wearable monitoring device 18 may need to first check for the proximity, at step S105A, of the user device 22, or *vice versa,* in order for the transfer of data to occur.

The processing module is then able to determine, at step S106, cognitive and physical indicator data based on the at least one cognitive indicator parameter, the at least one further cognitive indicator parameter, and the at least one physical indicator parameter.

Cognitive and physical information can then be displayed, at step S107, to a user 26 of the user device 22 based on the cognitive and physical indicator data.

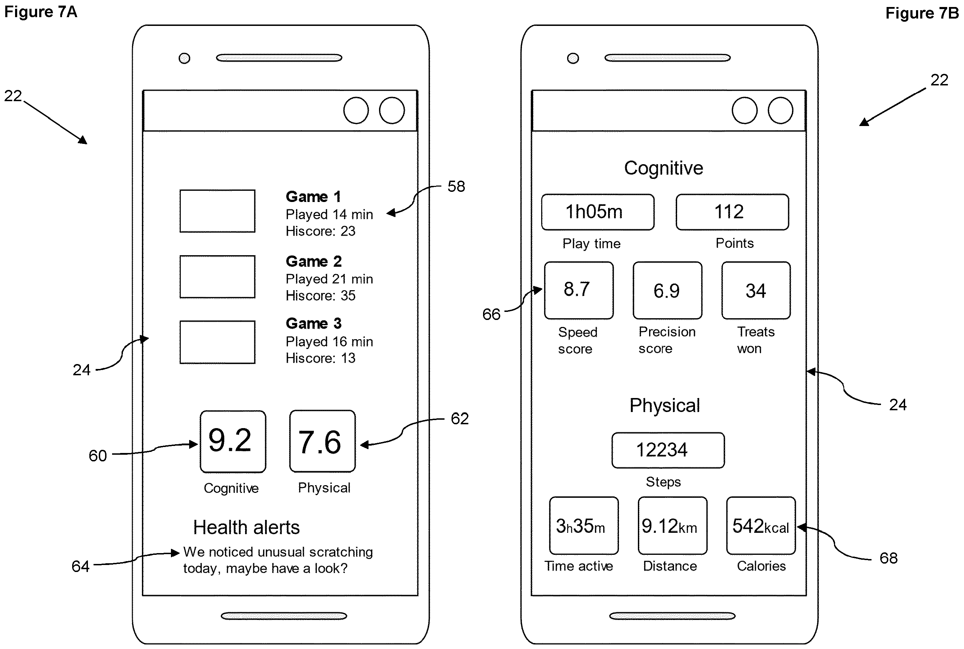

Examples of the type of visual output of the cognitive and physical information are illustrated in Figures 7A and 7B, showing indicative screens within an app on a user device 22, here illustrated as a smartphone.

Figure 7A shows an overview screen, in which gameplay data 58 relating to the different games played by the pet 12 at the touch screen display device 14 is shown. A cognitive summary score 60 and a physical summary score 62 are also shown, which may be derived from the cumulative set of cognitive and physical indicator parameter data to provide users 26 with a simple overview of the pet's health, allowing trends to be identified.

Also shown is an indicative health warning 64, which here is provided as a prompt to the user 26 to investigate a status of the pet 12, which may be presented based on a determination of a potential ailment. Here, scratching may be indicative of a dermatological condition, or could be a symptom of an underlying cognitive impairment. More detailed information could be provided here, depending on historic data retrieved by the system 10. Machine learning techniques could be used to improve the presentation of possible ailment diagnostics.

Figure 7B shows a second indicative screen providing more summary information regarding the cognitive and physical status of the pet 12. Some of the information may just be for administrative purposes, such as overall play time, but parameter summary scores 66 may be provided which may be indicative of specific cognitive or physical indicator parameters. General physical data summaries 68 may also be provided.

It will be appreciated that whilst the above-described embodiments form one implementation of the invention, this is non-limiting.

For example, it may be possible to provide an alternative input mechanism for retrieving cognitive data from a pet, which differs from touch screen input. For instance, it may be that illuminated buttons on a keyboard could be provided for the pet to interact with. Such an arrangement could still be utilised without deviating from the scope of the present invention.

A generalised method eliminating a touch screen may therefore be described as a method of determining a cognitive and/or physical capacity of a pet to provide cognitive and/or physical information to a user, the method comprising the steps of: a) providing a cognitive and/or physical capacity assessment system for the pet, the system comprising: an interactive input device; a wearable monitoring device having a wearable item fixable to the pet and at least one sensor mounted to the wearable item; a processing module communicable with the interactive input device and the wearable monitoring device; and a user device having a display screen, the user device being communicable with the processing module; wherein the wearable monitoring device is in-use fixed to the pet, and wherein the interactive input device is in-use positioned to receive an input from the pet; b) presenting one or more cognitive and/or physical indicator stimuli associated with the interactive input device; c) determining at least one cognitive and/or physical indicator parameter based on the input made by the pet (in response to the one or more cognitive and/or physical indicator stimuli; d) providing the at least one cognitive and/or physical indicator parameter to the processing module; e) determining at least one further cognitive indicator parameter and at least one physical indicator parameter based on measurements collected by the at least one sensor mounted to the wearable item of the wearable monitoring device; f) providing the at least one further cognitive indicator parameter and/or at least one physical indicator parameter to the processing module; g) determining, at the processing module, cognitive and/or physical indicator data based on the at least one cognitive and/or physical indicator parameter, the at least one further cognitive indicator parameter, and/or the at least one physical indicator parameter; and h) displaying cognitive and/or physical information to a user of the user device based on the cognitive and/or physical indicator data.

Similarly, whilst cloud-based hosting of the processing module could be provided, it will be appreciated that any appropriate form of centralised or decentralised hosting may be provided without departing from the scope of the invention.

It will be apparent that additional functionality could be provided to the system to allow for upgrading of diagnostic capabilities, for example, by providing additional accessories or peripherals for either the touch screen display device or the wearable monitoring device.

It is therefore possible to provide a system and method of determining a cognitive and physical capacity of a pet to provide cognitive and physical information to a user 26, which allows for a holistic health overview of the pet to be generated, based on multiple different but complementary measurements taken regarding the pet. This improves pet and owner wellbeing, since negative trends can be more rapidly identified.

The words 'comprises/comprising' and the words 'having/including' when used herein with reference to the present invention are used to specify the presence of stated features, integers, steps, or components, but do not preclude the presence or addition of one or more other features, integers, steps, components, or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The embodiments described above are provided by way of examples only, and various other modifications will be apparent to persons skilled in the field without departing from the scope of the invention as defined herein.

## Claims

1. A method (M100) of determining a cognitive and physical capacity of a pet (12) to provide cognitive and physical information to a user (26), the method (M100) comprising the steps of:
a) providing a cognitive and/or physical capacity assessment system (10) for the pet (12), the system (10) comprising:
a touch screen display device (14) having a touch screen (16);
a wearable monitoring device (18) having a wearable item (20) fixable to the pet (12) and at least one sensor (50) mounted to the wearable item (20);
a processing module communicable with the touch screen display device (14) and the wearable monitoring device (18); and
a user device (22) having a display screen (24), the user device (22) being communicable with the processing module;
wherein the wearable monitoring device (18) is in-use fixed to the pet (12), and wherein the touch screen display device (14) is in-use positioned to receive a touch response from the pet (12);
b) displaying (S101) one or more cognitive indicator stimuli (34) on the touch screen (16) of the touch screen display device (14);
c) determining (S102) at least one cognitive indicator parameter based on a stimulus response input made by the pet (12) at the touch screen (16) in response to the one or more cognitive indicator stimuli;
d) providing (S103) the at least one cognitive indicator parameter to the processing module;
e) determining (S104) at least one further cognitive indicator parameter and at least one physical indicator parameter based on measurements collected by the at least one sensor (50) mounted to the wearable item (20) of the wearable monitoring device (18);
f) providing (S105) the at least one further cognitive indicator parameter and at least one physical indicator parameter to the processing module;
g) determining (S106), at the processing module, cognitive and physical indicator data based on the at least one cognitive indicator parameter, the at least one further cognitive indicator parameter, and the at least one physical indicator parameter; and
h) displaying (S107) cognitive and physical information to a user (26) of the user device (22) based on the cognitive and physical indicator data.

2. A method (M100) as claimed in claim 1, wherein, during step g], the determining of the cognitive and physical data indicator data is performed based on any or all of: pre-processed cognitive indicator parameter data based on the at least one cognitive indicator parameter; pre-processed further cognitive indicator parameter data based on the at least one further cognitive indicator parameter; and pre-processed physical indicator parameter data based on the at least one physical indicator parameter.

3. A method (M100) as claimed in claim 2, wherein any or all of the pre-processed cognitive indicator parameter data, the pre-processed further cognitive indicator parameter data, and the pre-processed physical indicator parameter data comprise diagnostic indicator data relating to one or more cognitive and/or physical capacities of the pet (12).

4. A method (M100) as claimed in claim 3, wherein the diagnostic indicator data comprises data indicative of one or more cognitive and/or physical ailments of the pet (12).

5. A method (M100) as claimed in any one of claims 2 to 4, wherein any or all of the pre-processed cognitive indicator parameter data, the pre-processed further cognitive indicator parameter data, and the pre-processed physical indicator parameter data is generated by a machine-learning algorithm.

6. A method (M100) as claimed in any one of the preceding claims, wherein during step h], the cognitive and physical information comprises one or more probabilistic scores indicative of one or more cognitive and/or physical ailments of the pet (12).

7. A method (M100) as claimed in any one of the preceding claims, wherein during step c], cognitive indicator parameters determined include any or all of: play score per game session; number of errors per game session; reaction time or speed; tapping precision; number of game sessions initiated by the pet (12); focus time; streak length for correct and/or incorrect touches; touch location preferences; and indicators of mental distress, such as destructive behaviour, posture, whining, barking, vomiting, or panting.

8. A method (M100) as claimed in any one of the preceding claims, wherein, during step e], the at least one further cognitive indicator parameter and at least one physical indicator parameter include any or all of: indicators of mental distress, such as destructive behaviour, posture, whining, barking, vomiting, pacing, or panting; number of steps taken; walking patterns or imbalances; sleep patterns; licking; eating and drinking habits; and shaking.

9. A cognitive and physical capacity assessment system (10) for a pet (12), the system (10) comprising:
a touch screen display device (14) having a touch screen (16);
a wearable monitoring device (18) having a wearable item (20) fixable to the pet (12) and at least one sensor (50) mounted to the wearable item (20);
a processing module communicable with the touch screen display device (14) and the wearable monitoring device (18); and
a user device (22) having a display screen (24), the user device (22) being communicable with the processing module;
wherein the wearable monitoring device (18) is configured to be in-use fixed to the pet (12), and wherein the touch screen display device (14) is in-use positioned to receive a touch response from the pet (12);
wherein the touch screen display device (14) is configured to display one or more cognitive indicator stimuli (34) on the touch screen (16), at least one cognitive indicator parameter based on a stimulus response input made by the pet (12) at the touch screen in response to the one or more cognitive indicator stimuli (34) being determinable;
wherein the at least one sensor (50) mounted to the wearable item (20) of the wearable monitoring device (18) is configured to measure at least one further cognitive parameter and at least one physical indicator parameter;
wherein the processing module is configured to determine cognitive and physical indicator data based on the at least one cognitive indicator parameter, the at least one further cognitive indicator parameter and the at least one physical indicator parameter; and
wherein the user device (22) is configured to display cognitive and physical information to a user 26 thereof based on the cognitive and physical indicator data.

10. A system (10) as claimed in claim 9, wherein the processing module is provided onboard any of the touch screen display device (14), the wearable monitoring device (18), and the user device (22).

11. A system (10) as claimed in claim 9, wherein the processing module is provided at a remote processing server (36).

12. A system (10) as claimed in any one of claims 9 to 11, wherein the wearable monitoring device (18) is directly communicable with the user device (22).

13. A system (10) as claimed in any one of claims 9 to 12, wherein the at least one sensor (50) comprises any or all of: an audio capture device; a heartrate monitor; an accelerometer; a position tracking device; a gyroscope; and a temperature sensor.

14. A system (10) as claimed in any one of claims 9 to 13, wherein the touch screen display device (14) further comprises an image capture device configured to capture images of the pet (12) during use.

15. A system (10) as claimed in any one of claims 9 to 14, wherein the touch screen display device (14) further comprises an audio capture device configured to capture audio of the pet (12) during use.
